# FASCICULE DE BREVET EUROPEEN

(11) **EP 0 716 810 B1**
(45) Date de publication et mention de la délivrance du brevet: **24.11.1999**
(21) Numéro de dépôt: 94119588.5
(22) Date de dépôt: 12.12.1994
(51) Int. Cl.: A23C 21/00, A23C 21/06, A23G 1/00, A23C 9/123

(54) **Procédé de fabrication d'un dérivé du lait pour chocolat et confiserie**
Verfahren zur Herstellung eines Nebenprodukts aus Milch für Schokolade und Süsswaren
Process for preparing a milk by-product for chocolate and confectionery

(43) Date de publication de la demande: 19.06.1996
(73) Titulaire: SOCIETE DES PRODUITS NESTLE S.A., 1800 Vevey (CH); SICA FRANCHE-COMTE SERUM, 70170 Port-Sur-Saone (FR)
(72) Inventeur: Chaveron, Michel, CH-1814 La Tour-de-Peilz (CH); Chaveron, Henri, F-60190 Cernoy (FR); Durupt, Delphine, F-70000 Vesoul (FR); Vareille, Philippe, CH-1806 Jongny (CH)
(74) Mandataire: Archambault, Jean

(56) Documents cités:
- CA-A- 837 533
- FR-A- 2 135 073
- US-A- 2 181 146
- US-A- 3 738 844
- T. SIENKIEWICS ET AL. 'Molke und Molkeverwertung' 1986 , VEB FACHBUCHVERLAG LEIPZIG , LEIPZIG * page 27 - page 32 *
- THE AUSTRALIAN JOURNAL OF DAIRY TECHNOLOGY, vol. 31,no. 1, 1976 pages 12-17, R. DELANEY 'Demineralisation of whey'
- JOURNAL OF THE SOCIETY OF DAIRY TECHNOLOGY, vol. 33,no. 2, 1980 pages 45-51, D. HOULDSWORTH 'Demineralisation of whey by means of ion exchange and electrodialyis'
- MILCHWISSENSCHAFT, vol. 40,no. 8, 1985 pages 454-456, A. KRUK 'Laktosekristallisation in eingedickter Molke im Hinblick auf die Molkenpulverqualität'

## Description

La présente invention se rapporte à un dérivé du lait comme ingrédient pour chocolat et confiserie destiné à remplacer tout ou partie du lait en poudre dans ces domaines.

Les dérivés du lait à base de lactosérum trouvent une utilisation en chocolaterie ou en confiserie à titre de charge en remplacement partiel ou total du lait écrémé en poudre, notamment dans les couvertures d'enrobage, les masses à glacer et les fourrages. C'est le cas en particulier du lactosérum partiellement déminéralisé. Toutefois, ce produit n'apporte pas une totale satisfaction aux chocolatiers et confiseurs sur les plans organoleptique et fonctionnel.

Selon EP-A-0026119, on fabrique une poudre laitière pour chocolat par cuisson-extrusion d'un mélange de poudre de lactosérum et de caséinate ou de lait écrémé, refroidissement et broyage fin.

Dans CA-A-837533, on met à disposition un ingrédient pour biscuiterie et confiserie par concentration séparée, de lait écrémé d'une part et de lactosérum d'autre part, puis mélange des concentrés, refroidissement du mélange et mise au repos pour favoriser la cristallisation du lactose sous forme de cristaux alpha et béta, puis séchage par pulvérisation.

La monographie de T. Sienkiewicz et al. "Molke und Molkeverwertung" mentionne la préconcentration avec dénaturation partielle des protéines de lactosérum pour changer leur hygroscopie, la cristallisation dirigée du lactose et le séchage en poudre par pulvérisation. Il fait également état de manière générale de l'utilisation de poudre partiellement désucrée (délactosée), respectivement partiellement déminéralisée en substitution du lait écrémé dans les aliments tels que les produits de pâtisserie-confiserie sucrée, les glaces et les fromages fondus (p. 27, col.de gauche, par. 4.2). Ce document préconise une dénaturation thermique partielle des protéines de lactosérum (p. 27, col de droite, par. 4.2.1, 2ème alinéa). Pour diminuer la salinité des concentrats, D1 préconise une addition de sirop de glucose (p.28, col. De gauche, alinéa 3). Pour éviter la prise en masse durant le séchage après concentration et la formation d'agglomérats dans la poudre, D1 recommande de diriger la cristallisation du lactose par ensemencement (p. 28, par. reliant les col. de gauche et de droite), de manière à former de gros cristaux (p. 31, col. de gauche, alinéa 3).

US-A-3738844 Décrit un procédé de préparation de poudre de lactosérum entrant dans la fabrication des fondants ou des caramels, produits fort différents du chocolat. Ce procédé consiste à préconcentrer le lactosérum, à le neutraliser jusqu'à un pH de 6,5 et à le traiter thermiquement dans des conditions douces (66° C/5-10 min.) de manière à pouvoir le clarifier avant de procéder à son électrodialyse pour en éliminer une partie des cendres. Pour obtenir une teneur en protéines de 20 à 40 %, on prévoit la séparation d'une partie du lactose par cristallisation. Ainsi, la neutralisation et le traitement thermique modéré avant clarification ont pour unique but de ne pas encrasser les appareils d'électrodialyse. Dans ce contexte, l'ajustement du pH à une valeur proche de la neutralité permet de conférer un goût neutre au produit et l'électrodialyse a pour effet de ne pas modifier ou masquer le goût dans les masses de confiserie en question (col. 4, 1er par.). La séparation d'une partie du lactose par cristallisation pour augmenter la teneur relative en protéines va à l'encontre de ce qui est prévu dans le présent procédé où la cristallisation du lactose est promue dans le concentrat pour des raisons d'adaptation à la technologie du chocolat pour laquelle une poudre de lait doit contenir une teneur suffisante en graisse libre.

Le but de l'invention est de fabriquer une poudre de dérivé du lait pour chocolat et confiserie, à base de lactosérum en remplacement partiel ou total du lait, tout en maintenant les qualités fonctionnelles et organoleptiques requises en confiserie et en chocolaterie que l'on attend habituellement d'une poudre de lait.

L'invention concerne donc un procédé de fabrication d'une poudre de dérivé du lait pour chocolat et confiserie à base de lactosérum, dans lequel on part d'une matière première lactique liquide à base de lactosérum déminéralisé à au moins 50 %, on ajuste le pH de la matière première à 5,8-6,3, on traite thermiquement la dite matière première dans des conditions de température et de durée conduisant à la dénaturation d'au moins 60 % des protéines sériques, on concentre la matière première ainsi traitée par évaporation, on induit la cristallisation du lactose dans le liquide concentré, puis on le sèche par pulvérisation.

Pour mettre en oeuvre le procédé selon l'invention, on part d'une matière première lactique qui est un mélange constitué en prépondérance d'un lactosérum avec un lait plus ou moins écrémé ou un produit équivalent à un lait plus ou moins écrémé. Comme produit équivalent à un lait plus ou moins écrémé, on peut citer un babeurre doux ou acide de crème de lait ou un mélange de babeurre doux et de babeurre acide ou encore un lait acidifié biologiquement.

Le lactosérum utilisé peut être acide ou, de préférence doux. Son taux de déminéralisation est au moins 50 %, afin de garantir une bonne qualité organoleptique de la poudre obtenue après séchage, avec des taux bas de chlorure et de sodium, par exemple avec un taux de sodium inférieur à 300 mg/100 g de matière sèche. Lorsque l'on utilise un lactosérum doux, le taux de déminéralisation souhaitable est environ 50 %. Si l'on part de lactosérum acide, contenant comparativement plus de minéraux, il est nécessaire que celui-ci soit déminéralisé de manière plus poussée, par exemple à environ 70%.

Le pH du mélange doit être ajusté à une valeur légèrement plus basse que le pH naturel du lait, pour plusieurs motifs: un pH acide développe un goût lactique souhaitable et favorise la dénaturation ultérieure des protéines par libération de calcium sous forme ionisée. Ce dernier est ajusté par addition, le cas échéant d'un acide de qualité alimentaire, par exemple l'acide citrique ou d'une base de qualité alimentaire, par exemple l'hydroxyde de calcium, ou encore d'un sel, par exemple le chlorure de calcium.

Les protéines sériques sont dénaturées à au moins 60 % au moyen d'un traitement thermique poussé approprié. Un tel traitement peut s'effectuer dans un échangeur tubulaire ou à plaques ou, de préférence par injection directe de vapeur, à 85-120° C pendant quelques secondes à quelques minutes, de préférence par injection directe de vapeur à environ 110° C pendant environ 80 s (le taux de dénaturation des protéines étant déterminé par la méthode de Rowland).

On concentre le mélange ainsi traité par évaporation, de telle sorte que le concentrat contienne au moins 50 % et de préférence environ 55 % en poids de matière sèche et que sa température à la sortie de l'évaporateur soit au moins 50° C, de manière à éviter un commencement de cristallisation du lactose dans l'évaporateur, ce qui pourrait conduire à une cristallisation anarchique de celui-ci.

L'étape suivante est la cristallisation dirigée du lactose. Elle a lieu par ensemencement avec du lactose finement cristallisé en quantité suffisante pour amorcer la cristallisation avec refroidissement à 15-25° C selon le pH, la température la plus basse correspondant au pH le plus élevé et maintien sous agitation lente à la température choisie pendant au moins 2 h. On opère avantageusement à pH bas, de manière à accélérer la cristallisation tout en générant un goût lacté prononcé. On obtient ainsi au moins 60 % et de préférence environ 80 % du lactose sous forme cristallisée.

On sèche enfin le concentrat par pulvérisation dans un courant d'air entrant très chaud, de manière que la température de l'air de sortie soit environ 80° C.

La poudre obtenue peut être avantageusement utilisée en remplacement partiel ou total du lait en poudre et, le cas échéant, du sucre en confiserie-chocolaterie, par exemple dans la fabrication du chocolat, du chocolat au lait, du chocolat blanc, des couvertures chocolatées, de masses de fourrage, des masses à glacer. Elle peut également être utilisée dans la fabrication de sauces, crèmes dessert ou encore crèmes glacées.

Les exemples ci-après illustrent l'invention. Dans ceux-ci, les pourcentages et parties sont pondéraux, sauf indication contraire.

### Exemple 1

A 1000 l de babeurre doux présentant une concentration en matière sèche de 8,3 % (85,4 g/l) et une teneur en matière grasse de 4,7 g/l, on ajoute 2300 l de lactosérum déminéralisé ayant un extrait sec de 148 g/l et une teneur résiduelle en sodium de 0,185 g/l.

On ajuste le pH du mélange à 5,8 par addition de 11,6 kg d'acide citrique en solution aqueuse à 10 % pour avoir environ 4 mmole/l de calcium libre. On préchauffe alors le mélange à 70° C au moyen d'un échangeur tubulaire ou à plaques, puis on le chauffe à 110° C par injection directe de vapeur à la pression de 3 bars pendant 80 s.

On concentre alors le mélange dans un évaporateur multi-effets à film tombant jusqu'à 55 % d'extrait sec. On règle les températures de l'évaporateur pour que la température du dernier effet soit au moins 50° C. On ensemence alors le concentrat avec 100 g de lactose ayant des cristaux de dimension inférieure ou égale à 10 microns. On refroidit ensuite le concentrat à 18° C et on garde la masse ainsi refroidie au moins 2h à cette température sous agitation lente afin d'avoir au moins 60 % du lactose sous forme cristallisée. Le 80 % des cristaux présente une taille comprise entre 40 et 110 microns.

On pulvérise ensuite le mélange dans une tour de séchage ayant, de préférence, une turbine d'atomisation. La température de l'air chaud entrant est 190° C et la température de l'air sortant 78° C.

La poudre recueillie au bas de la tour a une teneur en eau de 1,5 % (déterminée par la méthode à l'étuve) et un poids spécifique non tassé < 500 g/l.

### Exemple 2

A 2500 l de babeurre acide de concentration en matière sèche 7,6 % (78,5 g/l), de pH 4,9 et de teneur en matière grasse 4,3 g/l, on ajoute 6900 l de lactosérum déminéralisé d'extrait sec 161 g/l, de teneur en sodium 225 g/l et de teneur en chlorure 97 g/l. On ajuste le pH à 5,9 par addition de 6,8 kg d'une solution aqueuse à 10 % d'hydroxyde de calcium. Les opérations de préchauffage, chauffage, concentration, ensemencement et séchage ont lieu comme à l'exemple 1 précédent.

### Exemple 3

A 2500 l d'un mélange de babeurre doux et de babeurre acide de pH 5,67 et de concentration en matière sèche 82 g/l, on ajoute 6680 l de lactosérum déminéralisé d'extrait sec 161 g/l, de teneur en sodium 225 g/l et de teneur en chlorure 97 g/l. On ajuste le pH à 5,82 par addition de 2,2 kg d'une solution aqueuse à 10 % d'hydroxyde de calcium et de 2,4 kg d'une solution aqueuse à 10 % d'hydroxyde de sodium. Les opérations de préchauffage, chauffage, concentration, ensemencement et séchage ont lieu comme à l'exemple 1 précédent.

### Exemple 4

A 1000 l de lait écrémé d'extrait sec 9,2 % (94,8 g/l), de pH 6,4 et de teneur en matière grasse 0,9 g/l, on ajoute 13,1 kg de crème à 35 % de matière grasse et 2700 l de lactosérum déminéralisé d'extrait sec 148 g/l et de teneur en sodium 178 g/l. On ajuste le pH du mélange à 5,7 par addition de 14,5 kg d'une solution aqueuse à 10 % d'acide citrique. Les opérations de préchauffage, chauffage, concentration, ensemencement et séchage ont lieu comme à l'exemple 1 précédent.

### Exemple 5

On prend 1000 l de lait partiellement écrémé de teneur en matière sèche 10,3 % (106,8 g/l) et ayant une teneur en matière grasse de 14,9 g/l que l'on pasteurise à 130° C pendant 5 s, puis on l'acidifie biologiquement jusqu'à pH 5,3 avec des cultures de Streptococcus thermophilis à la température de 40° C. On ajoute au lait acidifié 2700 l de lactosérum déminéralisé d'extrait sec 148 g/l et de teneur en sodium 178 g/l. On ajuste le pH du mélange à 5,8 par addition d'une solution aqueuse d'hydroxyde de calcium. Les opérations de préchauffage, chauffage, concentration, ensemencement et séchage ont lieu comme à l'exemple 1 précédent.

### Exemples 6-8

### Chocolat (exemple 6), chocolat au lait (exemple 7) et chocolat blanc (exemple 8)

On mélange la poudre de dérivé du lait préparée selon l'exemple 1 avec du saccharose, de la masse de cacao, du beurre de cacao et, le cas échéant de la poudre de lait séchée sur rouleau ou en tour, puis on broie le mélange de manière que la taille moyenne des particules soit environ 20 microns. On y ajoute ensuite de la lécithine et de la vanilline dans une conche. Les ingrédients sont dans les proportions indiquées dans le tableau I ci-après. On conche le mélange, on le tempère, on le verse dans des moules et on démoule le chocolat de manière conventionnelle. A titre de référence, on effectue les mêmes opérations dans les mêmes conditions, mais sans ajouter de dérivé du lait.

**Tableau I**

| Exemple Composition | 6 | Référence | 7 | Référence | 8 | Référence |
|---|---|---|---|---|---|---|
| Masse de cacao, 55 % de matière grasse, g | 500 | 500 | 100 | 100 | - | - |
| Sucre, g | 346 | 391 | 450 | 450 | 450 | 450 |
| Lait, séché sur rouleau, 26 % de matière grasse, g | - | - | 150 | 220 | 235 | 300 |
| Beurre de cacao, g | 104 | 104 | 215 | 215 | 245 | 245 |
| Dérivé du lait, g | 45 | - | 50 | - | 50 | - |
| Lécithine + vanilline, g | 5 | 5 | 5 | 5 | 5 | 5 |
| Matière grasse lactique anhydre, g | - | - | 30 | 10 | 15 | - |

A l'aide d'un panel de dégustateurs, on a comparé les chocolats respectifs fabriqués avec le dérivé du lait avec les mêmes chocolats ne contenant pas un tel dérivé. Les critères de comparaison étaient les caractères de finesse, fondant, sucré, lacté, cacaoté et de flaveur étrangère, ces caractères contribuant par la note attribuée à une note générale. Les notes générales obtenues ont été les suivantes:

| Exemple | 7 | Référence | 8 | Référence |
|---|---|---|---|---|
| Note | 5,78 | 5,5 | 5,19 | 5 |

## Revendications

1. Procédé de fabrication d'une poudre de dérivé du lait pour chocolat et confiserie à base de lactosérum, dans lequel on part d'une matière première lactique liquide à base de lactosérum déminéralisé à au moins 50 %, on ajuste le pH de la matière première à 5,8-6,3, on traite thermiquement la dite matière première dans des conditions de température et de durée conduisant à la dénaturation d'au moins 60 % des protéines sériques, on concentre la matière première ainsi traitée par évaporation, on induit la cristallisation du lactose dans le liquide concentré, puis on le sèche par pulvérisation.

2. Procédé selon la revendication 1, caractérisé par le fait que la matière première lactique est un mélange constitué en prépondérance d'un lactosérum avec un lait plus ou moins écrémé ou un produit équivalent à un lait plus ou moins écrémé, notamment un babeurre doux ou acide de crème de lait ou un mélange de babeurre doux et de babeurre acide ou un lait acidifié biologiquement.

3. Procédé selon la revendication 1, caractérisé par le fait que le lactosérum utilisé a un taux de déminéralisation d'au moins 50 %, afin de garantir une bonne qualité organoleptique de la poudre obtenue après séchage, avec des taux bas de chlorure et de sodium, notamment un taux de sodium inférieur à 300 mg/100 g de matière sèche.

4. Procédé selon la revendication 1, caractérisé par le fait que le pH du mélange est ajusté par addition, le cas échéant d'un acide de qualité alimentaire, notamment l'acide citrique ou d'une base de qualité alimentaire, notamment l'hydroxyde de calcium ou d'un sel de qualité alimentaire, notamment le chlorure de calcium.

5. Procédé selon la revendication 1, caractérisé par le fait que les protéines sériques sont dénaturées à au moins 60 % au moyen d'un traitement thermique effectué dans un échangeur tubulaire ou à plaques ou par injection directe de vapeur, à 85-120° C pendant quelques secondes à quelques minutes.

6. Procédé selon la revendication 1, caractérisé par le fait que l'on concentre la matière première lactique traitée thermiquement par évaporation, de telle sorte que le concentrat contienne au moins 50 % en poids de matière sèche et que sa température à la sortie de l'évaporateur soit au moins 50° C, de manière à éviter un commencement de cristallisation du lactose dans l'évaporateur.

7. Procédé selon la revendication 1, caractérisé par le fait que l'on dirige la cristallisation du lactose dans le liquide concentré par ensemencement avec du lactose finement cristallisé en quantité suffisante pour amorcer la cristallisation avec refroidissement à 15-25° C selon le pH, la température la plus basse correspondant au pH le plus élevé et maintien sous agitation lente à la température choisie pendant au moins 2 h., de manière à obtenir au moins 60 % du lactose sous forme cristallisée.

8. Poudre de dérivé du lait obtenue par la mise en oeuvre du procédé selon l'une des revendications 1 à 7.

9. Utilisation d'une poudre selon la revendication 8, dans la fabrication de produits de confiserie-chocolaterie.

10. Utilisation d'une poudre selon la revendication 8, dans la fabrication de crèmes glacées, sauces ou crèmes dessert.

## Claims

1. Method for preparing a powdered milk byproduct for chocolate and confectionery based on whey, in which the starting point is a liquid lactic starting material based on whey demineralized by at least 50 %, the pH of the starting material is adjusted to 5.8-6.3, the said starting material is heat treated under conditions of temperature and time leading to the denaturing of at least 60 % of the whey proteins, the starting material thus treated is concentrated by evaporation, and crystallization of lactose is induced in the concentrated liquid which is then spray dried.

2. Method according to claim 1, characterized in that the lactic starting material is a mixture consisting of a preponderance of a whey with a milk skimmed to a varying extent or a product equivalent to a milk skimmed to a varying extent, in particular a sweet or sour buttermilk from milk cream or a mixture of sweet buttermilk and sour buttermilk or a biologically acidified milk.

3. Method according to claim 1, characterized in that the whey used has a degree of demineralization of at least 50 %, in order to guarantee good organoleptic quality for the powder obtained after drying, with low sodium chloride levels, in particular a sodium level less than 300 mg/100 g of dry matter.

4. Method according to claim 1, characterized in that the pH of the mixture is adjusted by adding, as required, a food grade acid, in particular citric acid, or a food grade base, in particular calcium hydroxide, or a food grade salt, in particular calcium chloride.

5. Method according to claim 1, characterized in that the whey proteins are denatured to at least 60 % by means of a heat treatment carried out in a tubular exchanger or a plate exchanger or by direct injection of steam at 85-120°C for several seconds to several minutes.

6. Method according to claim 1, characterized in that the lactic starting material, heat treated by evaporation, is concentrated so that the concentrate contains at least 50 % by weight of dry matter and its temperature on leaving the evaporator is at least 50°C, so as to prevent the commencement of crystallization of lactose in the evaporator.

7. Method according to claim 1, characterized in that the crystallization of lactose in the concentrated liquid is directed by seeding with finely crystallized lactose in sufficient quantity to trigger crystallization with cooling to 15-25°C according to the pH, the lowest temperature corresponding to the highest pH, and slow stirring is maintained at the chosen temperature for at least 2 h, so as to obtain at least 60 % lactose in a crystallized form.

8. Powdered milk byproduct obtained by implementing the process according to one of claims 1 to 7.

9. Use of a powder according to claim 8, in the preparation of chocolate-confectionery products.

10. Use of a powder according to claim 8, in the preparation of ice creams, sauces or dessert creams.

## Patentansprüche

1. Verfahren zur Herstellung eines Pulvers aus einem Milchpräparat für Schokolade und Süßwaren auf der Basis von Molke, bei dem man ausgeht von einem flüssigen Milch-Ausgangsmaterial auf der Basis einer wenigstens zu 50% entmineralisierten Molke, den pH des Ausgangsmaterial auf 5,8-6,3 einstellt, dieses Ausgangsmaterial bei Temperaturbedingungen und für eine Dauer thermisch behandelt, die zu einer Denaturierung von wenigstens 60% der Molkeproteine führen, das auf diese Weise behandelte Ausgangsmaterial durch Eindampfen konzentriert, eine Kristallisation von Lactose in der konzentrierten Flüssigkeit einleitet, und danach sprühtrocknet.

2. Verfahren nach Anspruch 1, dadurch gekennzeichnet, daß das Milch-Ausgangsmaterial eine Mischung ist, die überwiegend aus einer Molke mit einer mehr oder weniger entrahmten Milch oder einem einer mehr oder weniger entrahmten Milch äquivalenten Produkt, insbesondere einer süßen oder sauren Buttermilch aus Rahm oder einer Mischung aus süßer Buttermilch und saurer Buttermilch oder einer biologisch angesäuerten Milch, besteht.

3. Verfahren nach Anspruch 1, dadurch gekennzeichnet, daß die Molke mit einem Entmineralisierungsgrad von wenigstens 50%, um eine gute organoleptische Qualität des nach dem Trocknen erhaltenen Pulvers zu garantieren, mit einem niedrigen Gehalt an Chlorid und Natrium, insbesondere einem Natriumgehalt von weniger als 300mg/100g Trockenmasse, verwendet wird.

4. Verfahren nach Anspruch 1, dadurch gekennzeichnet, daß der pH der Mischung durch Zugabe von je nachdem einer Säure von Nahrungsmittelqualität, insbesondere Citronensäure, oder einer Base von Lebensmittelqualität, insbesondere Calciumhydroxid, oder eines Salzes von Lebensmittelqualität, insbesondere Calciumchlorid, eingestellt wird.

5. Verfahren nach Anspruch 1, dadurch gekennzeichnet, daß die Molkeproteine zu wenigstens 60% mittels einer Wärmebehandlung denaturiert werden, die in einem Rohr- oder Plattenwärmeaustauscher oder durch direkte Dampfinjektion bei 85-120°C für einige Sekunden bis zu einigen Minuten bewirkt wird.

6. Verfahren nach Anspruch 1, dadurch gekennzeichnet, daß man das thermisch behandelte Milch-Ausgangsmaterial durch Eindampfen konzentriert, und zwar so, daß das Konzentrat wenigstens 50 Gew.-% Trockenmasse enthält und seine Temperatur am Ausgang des Verdampfers wenigstens 50°C beträgt, auf eine Weise, daß ein Einsetzen der Kristallisation der Lactose im Verdampfer vermieden wird.

7. Verfahren nach Anspruch 1, daß man die Kristallisation der Lactose in der konzentrierten Flüssigkeit durch Animpfen mit einer feinkristallinen Lactose in einer solchen Menge steuert, daß die Kristallisation je nach dem pH beim Abkühlen auf 15-25°C ausgelöst wird, wobei eine niedrigere Temperatur einem höheren pH entspricht, und man die gewählte Temperatur unter leichtem Rühren wenigstens 2h aufrecht erhält, so daß wenigstens 60% der Lactose in kristallisierter Form erhalten wird.

8. Pulver aus einem Milchpräparat, das bei der Durchführung eines Verfahrens nach einem der Ansprüche 1 bis 7 erhalten wurde.

9. Verwendung eines Pulvers nach Anspruch 8 bei der Herstellung von SÜßwaren und Schokoladeprodukten.

10. Verwendung eines Pulvers nach Anspruch 8 bei der Herstellung von Eiscreme und Dessertsoßen und -cremes.
